# EUROPEAN PATENT SPECIFICATION

(11) **EP 1 893 679 B1**
(45) Date of publication and mention of the grant of the patent: **11.03.2009**
(21) Application number: 06763292.7
(22) Date of filing: 25.05.2006
(51) Int. Cl.: C08K 5/098, C08K 5/00

(54) **POLYESTER COMPOSITIONS COMPRISING AN ORGANO-METALLIC COMPOUND**
EINE METALLORGANISCHE VERBINDUNG ENTHALTENDE POLYESTERZUSAMMENSETZUNGEN
COMPOSITIONS DE POLYESTER RENFERMANT UN COMPOSE ORGANOMETALLIQUE

(30) Priority: 26.05.2005 US 685098 P
(43) Date of publication of application: 05.03.2008
(73) Proprietor: M & G Polimeri Italia S.P.A., 03010 Patrica (FR) (IT)
(72) Inventor: AL GHATTA, Hussain, I-03014 Fiuggi (Frosinone) (IT); BLACK, Jeffrey D., Akron, Ohio 44312 (US)
(74) Representative: Gerbino, Angelo
(86) International application number: PCT/EP2006/062631
(87) International publication number: WO 2006/125823

(56) References cited:
- EP-A- 0 301 719
- US-A- 4 912 167
- US-A- 5 302 430
- US-A1- 2005 181 155
- US-B1- 6 414 063

## Description

This invention relates to the composition of at least one organo-metal compound wherein the metal is selected from the group consisting of Vanadium +5, Vanadium +4, Vanadium +3, Manganese +3, Manganese. +2, and Chromium +3 and melt blended with a polyester and a polyamide to form an article such as a container wall with less haze than the polyester-polyamide blend without the metal compound.

Products sensitive to oxygen, particularly foods, beverages and medicines, deteriorate or spoil in the presence of oxygen. One approach to creating an oxygen free environment is to package such products in a container comprising at least one layer of a so-called "passive" gas barrier film that acts as a physical barrier and reduces or eliminates the transmission of oxygen through the container wall but does not react with oxygen. For instance, layers of thermoplastic polyester (PET) are often supplemented with additional layers of packaging material to prevent oxygen permeability.

As packaging demands become more complex, multiple components are needed to increase the functional properties of the package. Barrier to vapor or specific compounds such as oxygen is one of the more important of these properties. Oxygen barrier materials are expensive and it is therefore desirable to minimize their cost in the final package.

Reduced rates of oxygen transmission can be achieved using passive or active barrier techniques. Passive barrier techniques reduce the transmission rate of the vapor or liquid into the package. By contrast, active barrier techniques incorporate material(s) into the wall of the package that react(s) with the vapor or liquid of concern and thus prevents their passage through the container wall.

Some packages integrate the passive barrier material into a separate layer in the wall of the container. This is accomplished by using one extruder to melt a major component and form the article while a second extruder melts the barrier material and injects the barrier material in a separate layer of the article that forms the wall of the container. United States Patent 4,501,781, for example, describes improving passive barrier properties by incorporating a polyamide layer and a polyester layer to make a multi-layer container. United States Patent 4,501,781 also teaches that the polyamide can be homogeneously blended with the polyester in the container wall as opposed to the polyamide being placed in a separate layer.

The active barrier technique, as described in United States Patent 5,021,515, involves the reaction of a component in the wall of a container with oxygen. Such a reaction has come to be known as oxygen scavenging. United States Patents 5,021,515, 5,049,624, and 5,639,815 disclose packaging materials and processes utilizing polymer compositions capable of scavenging oxygen; such compositions include an oxidizable organic polymer component, preferably a polyamide (more preferably m-xylylene adipamide, commonly referred to as MXD6) and a metal oxidation promoter (such as a cobalt compound).

United States Patent 5,529,833 describes a composition comprising an ethylenically unsaturated hydrocarbon oxygen scavenger catalyzed by a promoter such as a transition metal catalyst and a chloride, acetate, stearate, palmitate, 2-ethylhexanoate, neodecanoate or naphthenate counterion. Preferred metal salts are selected from cobalt (II) 2-ethylhexanoate and cobalt (II) neodecanoate.

United States Patent Numbers 6,406,766, 6,558,762, 6,346,308, 6,365,247, and 6,083,585 teach to functionalize the oxidizable component such as a polybutadiene oligomer and react it into the backbone of the major polymer matrix, such as polyethylene terephthalate (PET). Such a composition may be incorporated into the wall of the container as a separate layer of the container wall or comprise the entire wall.

Elemental or reduced metal scavengers are other active barrier techniques. These metals, usually in the presence of a promoter such as sodium chloride, are not reactive with oxygen until exposed to moisture that triggers the reaction. The advantage of the metal scavenger is that a pellet containing a metal based scavenger will not react with oxygen unless placed in contact with moisture, a component that is external to the pellet. The use of an agent external to the pellet composition to initiate the reaction makes this a triggerable system. This is in stark contrast to the previously discussed organic systems which are active when the ingredients are combined to make the container or pellet. It is noted that there are some oxygen reactive compounds that have both an inherent reactivity with oxygen and also have a promotable and/or a triggerable reactivity as well.

All the current systems rely on making a non-polyester component react with oxygen. None of the art considers making a polyester composition react with oxygen in the absence or a third component, such as the polyamide.

It is therefore preferable to combine all the components into one layer, called a mono-layer construction. The monolayer construction does not work for most compositions due to poor aesthetics. For example, a monolayer of poly(m-xylylene adipamide) (MXD6) blended into polyethylene terephthalate or its copolymers (PET) has unacceptable haze at functional barrier levels of the MXD6. This is particularly the case for the walls of stretch blow molded and reheat stretch blow molded containers or stretched film wraps. In the blow molded example, the PET/MXD6 composition is first molded into an amorphous article called a preform. The preform is tube shaped with a single threaded opening. The preform is then stretched and the material into the shape of the container.

Depending upon the process, the preform can be stretched after molding but before it cools below the polyester glass transition temperature or the molded preform can be stretched after being reheated to above the glass transition temperature. The preform of PET and MXD6 is transparent with very little haze. However, upon stretching even very thin walls have a n unacceptable amount of haze. This haze is such that it renders an uncoloured mono-layer bottle with stretched walls made from polyester-polyamide blends unmarketable.

United States Patent 6,288,161 teaches that such orientation may have a deleterious effect on the color and clarity of the structure. United States Patent No. 6,288,161 attributes these problems to a change in the refractive index of the materials when the polymers are oriented. Orientation enlarges the domain size of the MXD6 so that it lies within the wavelength range of visible light (400 -700nm) and results in the increased scattering of light. United States Patent No. 6,288,161 teaches overcoming the haze by limiting the degree of orientation so that the MXD6 domains increa se in size up to less than the wavelength of visible light (400nm). Table 1 of United States Patent No. 6,288,161 shows a fourfold increase in haze when the article is oriented to a 9 drawdown. Tables 2 and 3 show even larger haze differences caused by the reheat stretch blow molding of the container wall. The high stretch associated with reheat blow and injection stretch blow processes are preferred over extrusion blow because of the economics and significantly greater barrier properties associated with the higher stretch ratios (drawdowns). There exists therefore a need for a low haze mono-layer stretched wall comprised of polyester (PET) and a polyamide, preferably MXD6.

One solution to reduce haze is to use low molecular weight polyamides. United States Patent No.- 6,444,283 discloses that the haze of a film of polyester blended with polyamide increases with increasing amounts of polyamide. The patent teaches that the haze of a polyester film with polyamide blended into the polyester can be eliminated by using a polyamide whose number average molecular weight is below 15000. The polyesters suitable for United States Patent No. 6,444,283 are any semi-crystallizable polyester homopolymer or copolymer that are suitable for use in packaging, and particularly food packaging. At present, there is no commercial grade of poly (m-xylylene adipamide), the preferred polyamide, available at the required molecular weight range taught in United States Patent No. 6,444,283.

Another solution is to use add a color absorber that absorbs the light that would be otherwise scattered by the polyamide. United States Patent Application Serial Number 10/796,167, teaches that the haze of an oriented PET-polyamide film can be visually masked by adding an absorber, such as a colorant to absorb the light at the wavelengths corresponding to the size of polyamide domains dispersed in the polyester. Because this technique makes the film coloured, its use is limited to coloured articles. Additionally, the application notes that while the observed haze may be non-existent, the measured haze, such as Hunter Haze is still quite high.

Another solution is to add a third component compatibilizer. United State Patent Application 2004/0013833 A1 discloses a compatibilized polymer blend comprising polyamide, PET or PET containing copolymer, and at least one compatibilizer. Preferred compatibilizers include modified PET, including IPA (isophthalic acid) modified PET, p-toluene sulfonic acid (pTSA) modified PET, pyrometillic dianhydride (PMDA) modified PET, and maleic anhydride modified PET; PET ionomers including sulfonated PET, acrylic-modified poly-olefin ionomer; and bisphenol-A epoxy resin, preferably of low molecular weight. In a preferred embodiment, a compatibilized polymer blend comprises polyamide, preferably MXD-6, PET or a PET containing copolymer, and at least one compatabilizer selected from IPA-modified PET and PET ionomer. Although PET ionomers are preferred, other polyester ionomers such as polybutylene terephthalate (PBT) ionomers and polypropylene (PPT) ionomers may also be used.

The polyester of 2004/0013833 A1's preferred embodiment comprises or consists essentially of an ethylene terephthalate component, otherwise known as polyethylene terephthalate or PET. The PET used in accordance with preferred embodiments may be copolymerized with suitable amounts of one or more co-monomer components. It is desirable that the thus-copolymerized polyester resin contain a comonomer component in an amount of from 1 to 6 mol percent, relative to the total moles of all constituent units of the polyester. In consideration of the degree of copolymerization with diethylene glycol that may be produced as a by-product in the process of producing the resin, some other comonomers may be added to the resin so as to make the resin copolymerized with them with the range noted above. Such other comonomers are not specifically defined, for which any of the monomers mentioned above are usable. Some preferred monomers include, but are not limited to, neopentyl glycol, cyclohexanedimethanol (CHDM), cyclohexanedicarboxylic acid, isophthalic acid (IPA), and naphthalenedicarboxylic acid (NDC).

The polyamide MXD6 available from Mitsubishi Gas Chemical (Japan) is suitable.

The compatibilizers of 2004/0013833 A1 include, but are not limited to, polyester ionomers, preferably PET ionomers, IPA modified PET, p-toluene sulfonic acid (pTSA) modified PET, pyrometillic dianhydride (PMDA) modified PET, and maleic anhydride modified PET. The polyester ionomers include those disclosed in U.S. Pat. No. 6,500,895 B1.

The polyester ionomers referred to in U.S. Patent 6,500,895, are the polycondensation reaction products of an aromatic dicarboxylic acid or its ester-forming derivative, a diol or its ester forming derivative, and an ester forming compound comprising an ionic sulfonate group.

In U.S. Application 2004/0013833 A1, the three components are mixed and subsequently melt compounded, for example, in a single or twin-screw extruder. Pellets can be formed from the melt blended composition and then Solid Phase polymerized or the composition can be directly molded into a monolayer or multilayer containers.

United States Patent No. 5,300,572 discloses a moldable polyester resin composition and molded articles therefrom include, based on the total weight of all resin compositions: A) between 2 to 98% by weight of a compatabilizing metal sulfonate group-containing aromatic polyester copolymer which is the polycondensation reaction product of (a) an aromatic dicarboxylic acid or its ester-forming derivative, (b) a diol compound or its ester-forming derivative, and (c) an ester-forming compound containing a metal sulfonate group; B) between 2 to 98% by weight of an additive resin which is one of (B-I) an olefin copolymer which is the copolymerization reaction product between an olefin with a least one of an a,b-unsaturated carboxylic acid or its derivative and a vinyl alcohol or its ester, an (B-II) a polyamide resin; and optionally (C) between 0 to 96% by weight of a non-compatibilizing aromatic polyester resin.

There exists therefore a need for a compound which allows a high barrier material and a low barrier material to be blended together to create a low haze stretched wall monolayer container. This inventions provide a composition who se mechanism is currently unknown which .reduces the measured and visual haze of the polyester-nylon blend when stretched into the wall of a container. In particular, the compounds work particularly well with polyethylene terephthalate, or its copolymers, blended with a polyamide, in particular poly (m-xylylene adipamide), commercially known as MXD6 (available from Mitsubishi Gas Chemical Company, Japan) and formed into the stretched wall of a container. This composition has the added benefit of making the polyester itself an oxygen scavenger, thus obviating the need for the high barrier material in many applications.

### Summary

What is disclosed is a thermoplastic composition comprising a polyester and a organo-metallo compound where the metal of the organo-metallo compound is selected from the group consisting of vanadium +3, vanadium +4, manganese +2, and chromium +3 wherein the organo-metallo compound is present at a level greater than 10ppm of the polymer components in the composition wherein the polyester is a crystallizable polyethylene terephthalate and the organo-metallo compound is the acetylacetonate of the metal, selected from the group consisting of vanadium acetylacetonate and vanadyl acetylacetonate. The composition further comprises a polyamide where the polyamide is the reaction product of amino caproic acid with itself or A-D where A is a residue of dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof and D, where D is a residue of a diamine comprising m-xylylene diamine, p-xylylene diamine, hexamethylene diamine, ethylene diamine, or 1,4 cyclohexanedimethylamine, or a mixture thereof. It is also disclosed that the above compositions can be made into a fiber, sheet, film, preform, or layer of the wall of a container.

### Detailed Description

Low visual and measured haze can be achieved by incorporating organo -metallo, also known as organo-metallo, compounds into the polyester-polyamide melt blend. The compounds of particular success are the metal compounds with the acetylacetonate ligand. Preferably, the metal is selected from the group consisting of Vanadium +5, Vanadium +4, Vanadium +3, Manganese +2, and Chromium +3.

Polyamides suitable for this invention are described as comprising the repeating unit amino caproic acid or A-D, wherein A is the residue of a dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof, and D is a residue of a diamine comprising m-xylylene diamine, p-xylylene diamine, hexamethylene diamine, ethylene diamine, or 1,4 cyclohexanedimethylamine, or a mixture thereof. These polyamides can range in number average molecular weight from 2000 to 60,000 as measured by end-group titration. These polyamides can also be described as the reaction product of amino caproic acid with itself and/or the reaction product of a residue of dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof with a residue of a diamine comprising m-xylylene diamine, p-xylylene diamine, hexamethylene diamine, ethylene diamine, or 1,4 cyclohexanedimethylamine, or a mixture thereof.

Those skilled in the art will recognize many of the combinations as well known commercially available polyamides. The reaction product of the residues of sebacic acid with hexamethylene diamine is nylon 610 and the reaction product of the residues of adipic acid and hexamethylene diamine is nylon 66. Nylon 612 is another nylon which benefits from the invention. Nylon 6 is a special type of polyamide which is made by the opening of caprolactam and then polymerizing the resulting amino caproic acid which has a formula of H₂N-(CH₂)₅-COOH. The preferred polyamide is the reaction product of the residues of adipic acid and m-xylylene diamine, known as poly-m-xylylene adipamide. This product is commercially known as MXD6 or nylon MXD6 and can be purchased from Mitsubishi Gas Chemical Company, Japan.

The polyester polymers and copolymers may be prepared, for example, by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. In this case, the homopolymer would be from 100 percent polar compound. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes referred to as terpolymers.

Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalic esters and naphthalic diesters.

These acids or esters may be reacted with an aliphatic diol. The diol usually has from about 2 to about 24 carbon atoms, a cycloaliphatic diol having from about 7 to about 24 carbon atoms, an aromatic diol having from about 6 to about 24 carbon atoms, or a glycol ether having from 4 to 24 carbon atoms. Suitable diols include, but are not limited to, ethylene glycol, 1,4-butenediol, trimethylene glycol, 1,6-hexanediol, 1,4-cyclohexanedimethanol, diethylene glycol, resorcinol, and hydroquinone.

Polyfunctional comonomers can also be used, typically in amounts of from about 0.01 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

The polyester according to the invention is a crystallizable polyethylene terephthalate. Copolymers of polyethylene terephthalate are also preferred. Specific copolymers and terpolymers of interest are polyethylene terephthalate modified with isophthalic acid or its diester, 2, 6 naphthalate dicarboxylic acid or its diester, and/or cyclohexane dimethanol. The polyester of focus is the crystallizable polyethylene terephthalate. The crystallizable polyethylene terephthalate has at least 85 mole % of the number of moles of acid groups derived from terephthalate and at least 85 mole % of the number of moles of alcohol or glycol groups derived from ethylene glycol and the total mole percent of the non-terephthalate and non-glycol moieties does not exceed 15 mole percent of the total number of moles of all monomers.

The esterification or polycondensation reaction of the carboxylic acids or esters with glycol typically takes place in the presence of a catalyst. Suitable catalysts include, but are not limited to, antimony oxide, antimony triacetate, antimony ethylene glycolate, organomagnesium, tin oxide, titanium alkoxides, dibutyl tin dilaurate, and germanium oxide. These catalysts may be used in combination with zinc, manganese, or magnesium acetates or benzoates. Catalysts comprising antimony are preferred.

Another suitable polyester is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. In addition to the polar compound such as sulfoisophthalic acid, other aromatic and aliphatic acids which may be used simultaneously to make a copolymer include, for example, isophthalic acid and sebacic acid.

Catalysts for preparing PTT include titanium and zirconium compounds. Suitable catalytic titanium compounds include, but are not limited to, titanium alkylates and their derivatives, titanium complex salts, titanium complexes with hydroxycarboxylic acids, titanium dioxide-silicon dioxide-co-precipitates, and hydrated alkaline-containing titanium dioxide. Specific examples include tetra-(2-ethylhexyl)-titanate, tetrastearyl titanate, diisopropoxy-bis(acetyl-acetonato)-titanium, di-n-butoxy-bis(triethanolaminato)-titanium, tributylmonoacetyltitanate, triisopropyl monoacetyltitanate, tetrabenzoic acid titanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

The polyester polymer of this composition may also contain small amounts of phosphorous compounds, such as phosphates, and a catalyst such as a cobalt compound, that tends to impart a blue hue. Also, small amounts of other polymers such as polyolefins can be tolerated in the continuous matrix.

After completion of the melt phase polymerization, the polyester can be made into a form such as a film or part or stranded and cut into smaller chips, such as pellets. The polymer is usually then crystallized and subjected to a solid phase (solid state) polymerization (SSP) step to achieve the intrinsic viscosity necessary for the manufacture of certain articles such as bottles. The crystallization and polymerization can be performed in a tumbler dryer reaction in a batch-type system. The solid phase polymerization can continue in the same tumble dryer where the polymer is subjected to high vacuum to extract the polymerization by-products.

The crystallization and polymerization can also be accomplished in a continuous solid state process whereby the polymer flows from one vessel to another after its predetermined treatment in each vessel. The crystallization conditions are relative to the polymer's crystallization and sticking tendencies. However, temperatures are usually from about 100°C to about 150°C. In the case of crystallisable polyesters, the solid phase polymerization conditions are generally 10°C below the melt point of the polymer. In the case of non-crystallisable polyesters, the solid phase polymerization temperature is 10°C below temperature where the polymer begins sticking to itself. Traditional solid phase polymerization temperatures for crystallisable polymers range from about 200°C to about 232°C, and more preferably from about 215°C to about 232°C. Those skilled in the art will realize that the optimum solid phase polymerization temperature is polymer specific and depends upon the type and amount of copolymers in the product. However, determination of the optimum solid phase polymerization conditions is frequently done in industry and can be easily done without undue experimentation.

The solid phase polymerization may be carried out for a time sufficient to raise the intrinsic viscosity to the desired level, which will depend upon the application. For a typical bottle application, the preferred intrinsic viscosity is from about 0.65 to about 1.0 deciliter/gram, as determined by the method described in the methods section. The time required to reach this viscosity may often range from about 8 to about 21 hours. It is known that the time can be both shorter and longer.

Raising the intrinsic viscosity can be accomplished using the multi-compartment pellet technique as described in WO 2005/110694 titled "Compartmentalized Resin Pellets", published 24 November 2005, the teachings of which are incorporated herein. This involves using the core-sheath design wherein the core comprises polyamide and the sheath comprises polyester. The organo-metallic acetylacetonate can be placed in any of the zones. The polyester-polyamide-organometallic acetylacetonate composition is then created during melt fabrication of the article when the pellets are melted and extruded.

In one embodiment of the invention, the polyester and polyamide of the present invention may comprise recycled polyester or recycled polyamide materials derived from recycled polymers, such as monomers, catalysts, and oligomers. Specifically contemplated is use of the metal compound to compatiblize the polyamide that is not separated from the polyester when multi-layered polyester/polyamide containers are recycled.

WO 2005/110694 describes the zoned or compartmentalized pellet as the preferred structure for the polyamide/polyester pellet. The preferred pellet structure is a polyamide core with a sheath of polyester. The organo-metallic compound can exist in either the core, sheath or both. It is recognized that the core or sheath could contain some amount of the ingredients found in the other zone as well.

As taught in the examples of the WO 2005/110694, this pellet can then be solid phase polymerized without the attendant color. The polyamide is actually blended with the polyester when the final article is made, thus taking advantage of incorporating the compound in the final article.

The organo-metallic compound can be added directly to the polyester or polyamide or both. The addition to either polymer can occur at any step where one of the polymer streams is in its liquid state such as melt polymerization. The combination of the three components can occur in a separate compounding of the individual polymers or melt-fabrication operation, such as the extrusion section where the polyamide and polyester are melt mixed and the polyamide dispersed into the polyester and the molten mixture then advanced to an article.

The article is often a preform or cast film or sheet using any of the well known techniques. The article is then stretched into a final product, usually a container. In the case of the preform, the container is made by blowing the preform when the preform is at a temperature above the glass transition of the polyester which stretches the composition into the shape of the container mold. Film or sheet is usually mechanically stretched at temperatures above the polyester glass transition temperature.

Containers having at least one wall incorporating the composition of the present invention are the preferred articles. Cups, pouches, boxes, bottles, lids and wrapped films are also examples of such walls. Stretched and unstretched films are included in the definition of container walls.

It is also contemplated to provide articles of a multilayer construction where at least one layer of the wall contains the claimed composition.

The following examples are provided for the purpose of illustrating the manufacture of the composition, the articles and containers. Also shown is the effect of composition's properties in the stretched wall. The examples are not intended to limit the scope of the invention. The polyester resin used in the examples was CLEARTUF® MAX from M&G Polymers, LLC, USA. CLEARTUF® MAX is an 0.84 Intrinsic Viscosity (I.V.) bottle grade copolyethylene terephthalate. The polyamide used in the examples was poly (m-xylxylene adipamide) MXD6 Grade 6007 from Mitsubishi Gas Chemical, Japan.

The compositions were prepared by tumble blending dry polyamide, dry polyester and the organo-metallic compound in a single container in the ratios and amounts noted in Table I. After thoroughly combining the ingredients, the container's contents were fed into an Arburg injection molding extruder to melt mix the ingredients. The Arburg melt mixed and melt extruded the polyester and polyamide with the organo-metallic compound. The Arburg machine then extruded and injected the new composition into a 27 gram preform. The preform was later reheat blown into a 1.5 Liter bottle and the bottle sidewall measured for haze. Table I shows the reduction in haze achieved by the addition of the organo-metallo compound when compared to a control with no compound. The control of polyester with 5% MXD6 and no organo-metallo compound measured a haze level of approximately 15%. The same composition but with the organo-metallo compounds showed a haze of 4%, indicative of rendering the polyester and nylon more compatible. Of particular interest is the Manganese which shows that the Mn+2 reduced the haze, while the Mn+3 did not. This demonstrates the specificity the invention. The vanadium was introduced in the acetylacetonate form. Vanadium (III) acetylacetonate with the CAS number 13476-99-8 has the formula V(acac)3, with a molecular weight of 348.27 and melt point of 181°C. Vanadyl (IV) acetylacetonate with the CAS number 3153-26-2 has the formula VO(acac)3, with a molecular weight of 265.15 and melt point of 256°C.

These polyester, polyamide compositions were also evaluated for their ability to scavenge oxygen. The inventors have discovered that the vanadium-polyester mixture scavenges oxygen. It is also apparent that the vanadium does not catalyze the reaction of nylon with oxygen. The examples of polyester-polyamide and vanadium showed little or no increased oxygen scavenging over the polyester vanadium alone.

**TABLE I - HAZE**

| Organo-Metallo Compound Type | INGREDIENT AMOUNTS (grams) | | HUNTER HAZE (%) | |
|---|---|---|---|---|
| | Polyester | Organo-Metallo Compound | With 75 grams MXD6 | Without MXD6 |
| Control | 1500 | | 15.00 | 2.44 |
| Manganese +2 | 1500 | 6.43 | 4.62 | 2.94 |
| Manganese +3 | 1500 | 8.95 | 13.95 | 14.72 |
| Vanadium +3 | 1500 | 8.85 | 4.24 | 2.56 |
| Vanadium +4 | 1500 | 6.74 | 5.23 | 2.44 |
| Chromium +3 | 1500 | 8.87 | 8.35 | 2.65 |
| Zirconium +3 | 1500 | 12.39 | 13.14 | 4.69 |
| Cobalt +2 | 1500 | 6.54 | 11.48 | |
| Cobalt +3 | 1500 | 9.08 | 10.28 | |

**Table II - Vanadium Haze Results**

| Organo-Metallo Compound Type | INGREDIENT AMOUNTS | | |
|---|---|---|---|
| | MXD6(wt%) determined by IR | Organo-Metallo Compound in ppm of Metal | Hunter Haze (%) |
| Vanadium +3 | 0 | 836 | 2.56 |
| Vanadium +3 | 2.75 | 836 | 4.24 |
| Vanadium +3 | 4.10 | 836 | 6.28 |
| Vanadium +4 | 0 | 836 | 2.44 |
| Vanadium +4 | 3.80 | 836 | 5.23 |
| Vanadium +4 | 0 | 418 | 2.05 |
| Vanadium +4 | 4.20 | 418 | 8.37 |
| Vanadium +4 | 0 | 83.6 | 2.31 |
| Vanadium +4 | 4.60 | 83.6 | 8.88 |

**Table III Vanadium Oxygen Scavenging**

| Organo-Metallo Compound Type | INGREDIENT AMOUNTS | | O₂ Reacted after 7 Days at 50°C. (ccO₂/gm composition) | |
|---|---|---|---|---|
| | MXD6(wt%) determined by IR | Organo-Metallo Compound in ppm of Metal | dry | wet |
| Vanadium +3 | 0 | 836 | 0.132 | 0.224 |
| Vanadium +3 | 2.75 | 836 | | |
| Vanadium +3 | 4.10 | 836 | 0.116 | 0.218 |
| Vanadium +4 | 0 | 836 | 0.105 | 0.203 |
| Vanadium +4 | 3.80 | 836 | 0.096 | 0.252 |
| Vanadium +4 | 0 | 418 | 0.071 | 0.150 |
| Vanadium +4 | 4.20 | 418 | 0.064 | 0.193 |
| Vanadium +4 | 0 | 83.6 | 0.050 | 0.067 |
| Vanadium +4 | 4.60 | 83.6 | 0.057 | 0.129 |

### Test Methods:

### Intrinsic Viscosity

The intrinsic viscosity of intermediate molecular weight and low crystalline poly(ethylene terephthalate) and related polymers which are soluble in 60/40 phenol/tetrachloroethane was determined by dissolving 0.1 grams of polymer or ground pellet into 25 ml of 60/40 phenol/tetrachloroethane solution and determining the viscosity of the solution at 30 °C +/-0.05 relative to the solvent at the same temperature using a Ubbbelohde 1B viscometer. The intrinsic viscosity is calculated using the Billmeyer equation based upon the relative viscosity.

The intrinsic viscosity of high molecular weight or highly crystalline poly(ethylene terephthalate) and related polymers which are not soluble in phenol/tetrachloroethane was determined by dissolving 0.1 grams of polymer or ground pellet into 25 ml of 50/50 trifluoroacetic Acid/Dichloromethane and determining the viscosity of the solution at 30 °C +/- 0.05 relative to the solvent at the same temperature using a Type OC Ubbelohde viscometer. The intrinsic viscosity is calculated using the Billmeyer equation and converted using a linear regression to obtain results which are consistent with those obtained using 60/40 phenol/tetrachloroethane solvent. The linear regression is IV (in 60/40 phenol/tetrachloroethane) = 0.8229 x IV (in 50/50 trifluoroacetic Acid/Dichloromethane) + 0.0124.

### The Hunter haze measurement

Haze is the measure of the amount of light deviation from the direction of transmittance by at least 2.5 degrees.

The measurements were taken through the bottle side-walls. A HunterLab ColorQUEST Sphere Spectrophotometer System equipped with an IBM PS/2 Model 50Z computer, IBM Proprinter II dot matrix printer, assorted specimen holders, and green, gray and white calibration tiles, and light trap was used. The HunterLa.b Spectrocolorimeter integrating sphere sensor is a color and appearance measurement instrument. Light from the lamp is diffused by the integrating sphere and passed either through (transmitted) or reflected (reflectance) off an object to a lens. The lens collects the light and directs it to a diffraction grating that disperses it into its component wave lengths. The dispersed light is reflected onto a silicon diode array. Signals from the diodes pass through an amplifier to a converter and are manipulated to produce the data. Haze data is provided by the software. It is the calculated ratio of the diffused light transmittance to the total light transmittance multiplied by 100 to yield a "Haze %" (0% being a transparent material, and 100% being an opaque material). Samples prepared for either transmittance or reflectance must be clean and free of any surface scratches or abrasion. The size of the sample must be consistent with the geometry of the sphere opening and in the case of transmittance, the sample size is limited by the compartment dimension. Each sample is tested in four different places, for example on the bottle sidewall or representative film area.

A Panametrics Magna-Mike 8000 Hall Effect Thickness Gauge was employed to measure the bottle sidewall thickness.

### Oxygen Absorbance Test - Polymer Samples

Bottle sidewall samples are cut to a predetermined size with a template and the sidewall sample weights (to the nearest 0.01 g) are recorded. The samples are placed into 20 ml vials, activated with 2 ml of aqueous 0.001 M acetic acid and crimp sealed. The sidewall samples are stored at the specified temperature. The individual tubes are analysed by gas chromatography for consumption of oxygen vs. a control at the prescribed time interval.

Each point is the average of three individual determinations.

## Claims

1. A thermoplastic composition comprising a polyester and a organo-metallo compound where the metal of the organo-metallo compound is selected from the group consisting of vanadium +3, vanadium +4, manganese +2, and chromium +3 wherein the organo-metallo compound is present at a level greater than 10ppm of the polymer components in the composition,
wherein the polyester is a crystallizable polyethylene terephthalate and the organo-metallo compound is the acetylacetonate of the metal, said composition further comprising a polyamide where the polyamide is the reaction product of amino caproic acid with itself or A-D where A is a residue of dicarboxylic acid comprising adipic acid, isophthalic acid, terephthalic acid, 1,4- cyclohexanedicarboxylic acid, resorcinol dicarboxylic acid, or naphthalenedicarboxylic acid, or a mixture thereof and D, where D is a residue of a diamine comprising m-xylylene diamine, p-xylylene diamine, hexamethylene diamine, ethylene diamine, or 1,4 cyclohexanedimethylamine, or a mixture thereof.

2. The composition of claim 1, where the organo-metallo compound is selected from the group consisting of vanadium acetylacetonate and vanadyl acetylacetonate.

3. The composition of claim 1 wherein the polyamide is MXD6 nylon.

4. The composition of claim 3 wherein the organo-metallo compound is the acetylacetonate of the metal.

5. The composition of claim 3 wherein the organo-metallo compound is selected from the group consisting of vanadium acetylacetonate and vanadyl acetylacetonate.

6. An article comprising the composition of claims 1-5 wherein the article is a fiber, sheet, film, preform, or layer of the wall of a container.

## Patentansprüche

1. Thermoplastische Zusammensetzung umfassend einen Polyester und eine Organometallo-Verbindung, wobei das Metall der Organometallo-Verbindung ausgewählt ist aus der Gruppe bestehend aus Vanadium +3, Vanadium +4, Mangan +2 und Chrom +3, wobei die Organometallo-Verbindung in einer Menge größer als 10 ppm der Polymerkomponenten in der Zusammensetzung vorliegt,
wobei der Polyester ein kristallisierbares Polyethylenteraphthalat ist und die Organometallo-Verbindung das Acetylacetonat des Metalls ist,
wobei die Zusammensetzung ferner ein Polyamid umfasst, wobei das Polyamid das Reaktionsprodukt von Aminocapronsäure mit sich selbst oder mit A-D ist, wobei A ein Rest von Dicarbonsäure ist umfassend Adipinsäure, Isophthalsäure, Teraphthalsäure, 1,4-Cyclohexandicarbonsäure, Resorcinolcarbonsäure oder Naphthalendicarbonsäure und Gemische davon und D, wobei D ein Rest eines Diamins ist, umfassend m-Xylylendiamin, p-Xylylendiamin, Hexamethylendiamin, Ethylendiamin oder 1,4-Cyclohexandimethylamin oder ein Gemisch davon.

2. Die Zusammensetzung nach Anspruch 1, wobei die Organometallo-Verbindung ausgewählt ist aus der Gruppe bestehend aus Vanadiumacetylacetonat und Vanadylacetylacetonat.

3. Die Zusarrimensetzung nach Anspruch 1, wobei das Polyamid MXD6-Nylon ist.

4. Die Zusammensetzung nach Anspruch 3, wobei die Organometallo-Verbindung das Acetylacetonat des Metalls ist.

5. Die Zusammensetzung nach Anspruch 3, wobei die Organometallo-Verbindung ausgewählt ist aus der Gruppe bestehend aus Vanadiumacetylacetonat und Vanadylacetylacetonat.

6. Gegenstand umfassend die Zusammensetzung nach einem der Ansprüche 1-5, wobei der Gegenstand eine Faser, eine Folie, ein Film, eine Vorform, oder eine Schicht der Wand eines Behälters ist.

## Revendications

1. Composition thermoplastique comprenant un polyester et un composé organométallique où le métal du composé organométallique est choisi dans le groupe consistant en le vanadium +3, le vanadium +4, le manganèse +2 et le chrome +3 où le composé organométallique est présent à un niveau supérieur à 10 ppm des composants du polymère dans la composition, où le polyester est un polyéthylènetéréphatalate cristallisable et le composé organométallique est l'acétylacétonate du métal, ladite composition comprenant en outre un polyamide où le polyamide est le produit de la réaction de l'acide aminocaproïque avec lui-même ou A-D où A est un résidu d'acide dicarboxylique comprenant l'acide adipique, l'acide isophtalique, l'acide téréphtalique, l'acide 1,4-cyclohexanedicarboxylique, l'acide résorcinol dicarboxylique ou l'acide naphtalènedicarboxylique, ou un mélange de ceux-ci et de D, où D est un résidu d'une diamine comprenant la m-xylylènediamine, la p-xylylènediamine, l'hexaméthylènediamine, l'éthylènediamine, ou la 1,4-cyclohexanediméthylamine, ou un mélange de celles-ci.

2. Composition selon la revendication 1 où le composé organométallique est choisi dans le groupe consistant en l'acétylacétonate de vanadium et l'acétylacétonate de vanadyle.

3. Composition selon la revendication 1 où le polyamide est le nylon MXD6.

4. Composition selon la revendication 3 où le composé organométallique est l'acétylacétonate du métal.

5. Composition selon la revendication 3 où le composé organométallique est choisi dans le groupe consistant en l'acétylacétonate de vanadium et l'acétylacétonate de vanadyle.

6. Article comprenant la composition selon les revendications 1-5 où l'article est une fibre, une feuille, un film, une ébauche ou une couche de la paroi d'un récipient.
